# EUROPEAN PATENT SPECIFICATION

(11) **EP 0 473 384 B1**
(45) Date of publication and mention of the grant of the patent: **09.07.1997**
(21) Application number: 91307804.4
(22) Date of filing: 23.08.1991
(51) Int. Cl.: H04N 7/24

(54) **Coding apparatus for digital image signals**
Kodierungsgerät für digitale Bildsignale
Dispositif de codage de signaux d'image digitaux

(30) Priority: 31.08.1990 JP 231535/90
(43) Date of publication of application: 04.03.1992
(73) Proprietor: SONY CORPORATION, Tokyo 141 (JP)
(72) Inventor: Kondo, Tetsujiro, c/o Patents Div., Sony Corp., Shinagawa-ku, Tokyo 141 (JP)
(74) Representative: Cotter, Ivan John

(56) References cited:
- EP-A- 0 267 581
- EP-A- 0 293 189
- EP-A- 0 330 455
- EP-A- 0 417 914
- EP-A- 0 430 631
- US-A- 4 802 005
- PATENT ABSTRACTS OF JAPAN vol. 10, no. 32 (E-379)7 February 1986 &JP-A-60 189 388

## Description

This invention relates to coding apparatus for digital image signals which apparatus can, for example, be used in a digital video tape recorder (VTR).

For coding a video signal, methods are known in which a mean number of bits (bit length) per pixel or a sampling frequency is reduced in order to narrow a transmission band. We have proposed coding apparatus in which a dynamic range which is specified by the maximum and minimum values of a plurality of pixels included in a two or three-dimensional block is obtained, and encoding adapted to the dynamic range is executed (Japanese patent specifications JP-A-61-144989 and JP-A-62-92620). Further, as disclosed in Japanese patent specification JP-A-62-128621, there has been proposed a variable length coding method in which the bit length is changed in accordance with the dynamic range, so that the maximum distortion occurring upon quantization is set to be constant.

According to the above coding method adapted to the dynamic range (ADRC), the dynamic range DR (difference between the maximum value MAX and the minimum value MIN) is calculated for each two-dimensional block comprising, for instance, 64 pixels (= 8 lines x 8 pixels). The minimum level (minimum value) in the block is eliminated from the input pixel data. The pixel data after elimination of the minimum value are converted into a representative level. The quantization includes dividing the dynamic range DR which has been detected into four level ranges corresponding to a bit length such as two bits smaller than the original quantization bit length, for detecting the level range to which each pixel datum in the block belongs, and for generating a code signal indicative of the level range.

We have also proposed a coding apparatus in which a three-dimensional ADRC and a frame dropping process are combined in order to raise the compression ratio further. In this apparatus, motion between two areas forming a three-dimensional block is detected, three-dimensional ADRC is executed in a block having motion, and in a stationary block, the transmission of one of the areas is omitted and two-dimensional ADRC is executed with respect to a block comprising a mean value of two areas.

In the above apparatus in which three-dimensional ADRC and frame dropping are combined, memory capacity of two frame is needed for a block segmentation process to form a three-dimensional block. When a buffering process is applied to the above apparatus, a memory of two frames is further necessary to delay input data until the number of bits to be assigned has been decided by the buffering process. A memory capacity of two frames is also needed for a block desegmentation of a decoding apparatus. The total memory capacity required is therefore large.

European Patent Application No. 87116594.0 (published as EP-A-0267581) discloses a system of coding moving image signals for producing a predictive error signal by a predictive coding based on inter-frame correlation and quantizing by a quantization unit, the produced predictive error signal for each block of a picture frame constituted by N lines of M pixels. The system includes a block coding/non-coding decision unit for calculating a first evaluation value of the predictive error signal for each block of the picture frame and deciding that a block non-coding is applicable when the first evaluation value is less than a first threshold value, and deciding that a block coding is applicable when the first evaluation value is greater than the first threshold value, the predictive error signal not being transmitted when the result of the decision is for a block non-coding, and the predictive error signal being quantized and transmitted when the result of the decision is for a block coding.

European Patent Application No. 89301739.2 (published as EP-A-0330455) discloses an image encoding apparatus that has a memory for storing image data corresponding to an object for every frame, and a face region detecting circuit for detecting a difference between input frame image data and preceding frame image data, and extracting image data of a face region of the object on the basis of the difference data. More bits are allocated to the extracted face region than those to the remaining image region.

In accordance with a first aspect of the present invention, there is provided a coding apparatus for a digital image signal, the apparatus comprising: a block segmentor for converting an input digital image signal into a first output signal having a two-dimensional block structure; a circuit for receiving and processing a second output signal, such that between a first and a second block which are located at spatially the same position and respectively belong to a pair of sequential frames of said second output signal, said first and second blocks are transmitted or not transmitted in dependence upon a control signal; a control circuit for generating said control signal; and an encoder to which pixel data of said first block and pixel data of said second block that are to be transmitted are supplied, said encoder compression encoding said pixel data on a block unit basis; said apparatus being characterised in that: said control signal is dependent upon an absolute value of a difference between values of pixel data at the same position between said first and second blocks; said control signal controls said circuit to always transmit said first block and to either transmit or not transmit said second block; and in that there is provided: a sub-sampling circuit for receiving and sub-sampling said first output signal to generate said second output signal, wherein sequential frames of said first output signal are grouped together in pairs and said sub-sampling circuit has a sub-sampling phase that is inverted every sequential pair of frames.

In accordance with a second aspect of the present invention, there is provided a method of encoding a digital signal, the method comprising: (a) converting an input digital signal into a first output signal having a two-dimensional block structure; (b) grouping sequential frames of said first output signal together in pairs; (c) sub-sampling said first output signal with a sub-sampling phase that is inverted every sequential pair of frames to produce a second output signal; (d) generating a control signal that is dependent upon an absolute value of a difference between values of pixel data at the same position between first and second blocks of sequential pair of frames of said second output signal; (e) processing said second output signal in a circuit (5), such that said first and second blocks are transmitted or not transmitted in dependence upon said control signal, said control signal instructing said circuit (5) to always transmit said first block and selectively transmit or not transmit said second block; and (f) compression encoding pixel data of said first block and pixel data of said second block that are to be transmitted on a block unit basis.

The invention will now be described by way of example with reference to the accompanying drawings, throughout which like parts are referred to by like references, and in which:
Figure 1 is a block diagram of an embodiment of the invention;
Figure 2 is a schematic diagram for explaining sub-sampling;
Figure 3 is a block diagram of an example of a buffering circuit;
Figure 4 is a schematic diagram of an example of a threshold value table;
Figure 5 is a flowchart for explaining the operation of the buffering circuit;
Figure 6 is a schematic diagram showing a frequency distribution table and an accumulative frequency distribution table which are formed by the buffering circuit;
Figure 7 is a flowchart for explaining the operation of an embodiment; and
Figure 8 is a schematic diagram for explaining the embodiment.

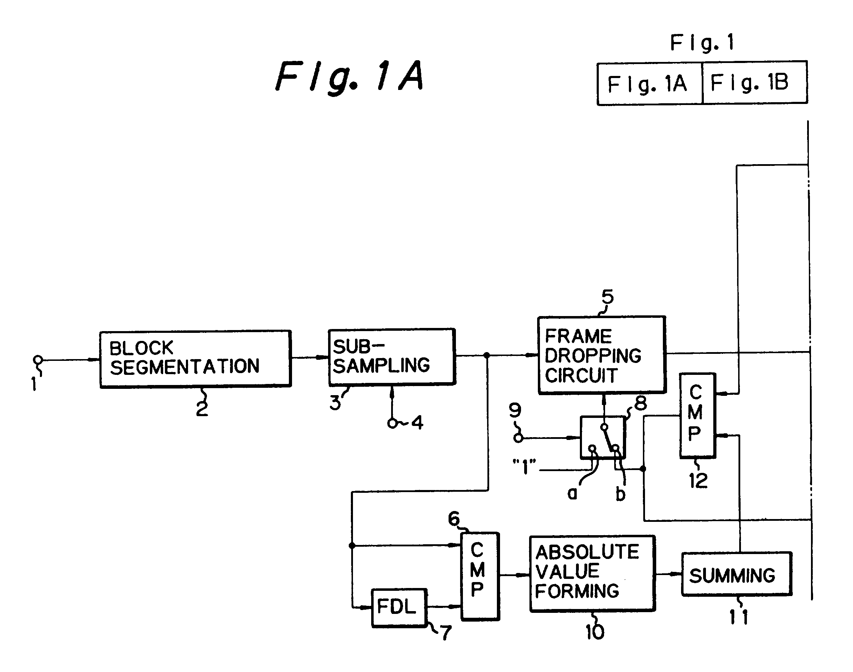

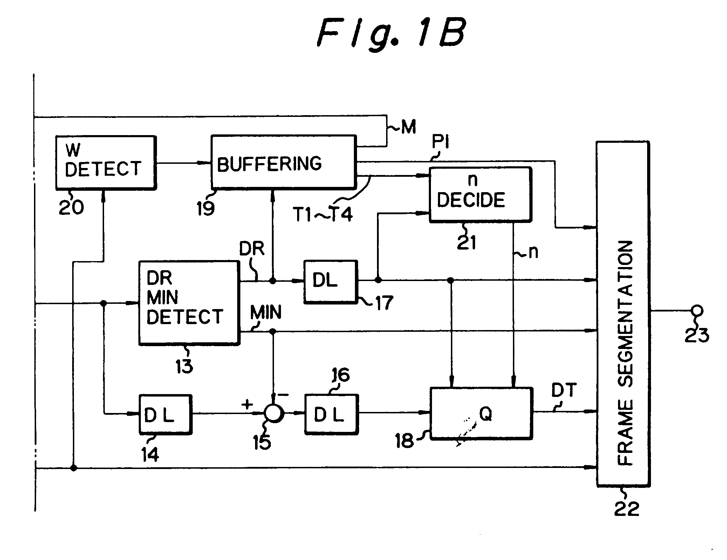

Referring to Figure 1, in the embodiment a digital video signal is supplied via an input terminal 1 to a block segmentation circuit 2 which converts the video signal from a raster scan into a block signal. That is, a picture plane of one frame is segmented into two-dimensional blocks of, for example, (4 lines x 8 pixels). Unlike three-dimensional blocks, when two-dimensional blocks are formed, the memory capacity of the block segmentation circuit 2 can be reduced.

An output signal from the block segmentation circuit 2 is supplied to a sub-sampling circuit 3 which halves the number of pixels by a quincunx sub-sampling pattern. Therefore, the number of pixels in one block becomes sixteen. A control signal to cause sub-sampling patterns of complementary forms every two frames is supplied from a terminal 4 to the sub-sampling circuit 3. Motion between the blocks can be detected from a difference of the pixel data of one frame by the sub-sampling.

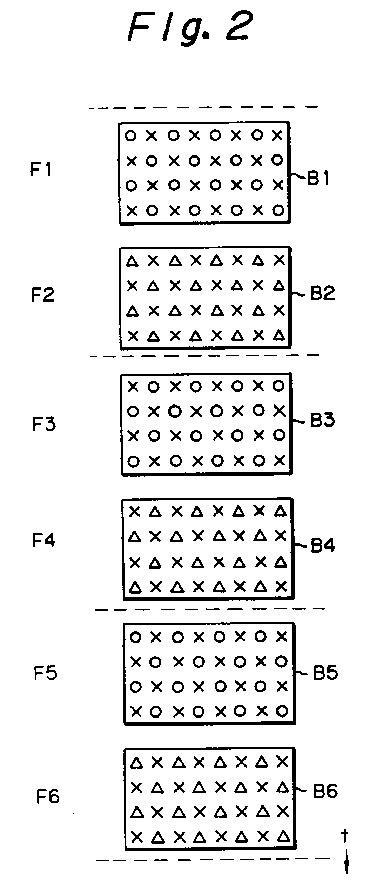

Figure 2 shows sub-sampling patterns. B1, B2, B3, ... denote blocks which are located spatially at the same position and respectively belong to sequential frames F1, F2, F3, ... A number of blocks other than the blocks shown in the diagram are included in each frame. In Figure 2, ○ and Δ denote transmission pixels, and X indicates non-transmission pixels. In respective two frame periods, such as the frames F1 and F2, the sub-sampling patterns are the same. As shown by partitioning by broken lines, the pattern of two frames and the pattern of the next two frames have complementary shapes.

An output signal of the sub-sampling circuit 3 is supplied to a frame dropping circuit 5 to drop frames on a block unit basis, a comparing circuit 6, and a frame delay circuit 7. A control signal to control whether frames should be dropped or not, that is, to control the transmission/non-transmission of the block is supplied to the frame dropping circuit 5 through a switching circuit 8. The switching circuit 8 is controlled by a switching signal from a terminal 9 so as alternately to select input terminals a and b at one frame period.

A signal of "1" is always supplied to the input terminal a of the switching circuit 8. For the frame dropping circuit 5, "1" denotes that the block is transmitted. Therefore, the blocks B1, B3, B5, ... included in the first frames F1, F3, F5, ... of two sequential frames are always transmitted. In the following frames F2, F4, F6, ..., the input terminal b of the switching circuit 8 is selected and the transmission/non- transmission is adaptively controlled. That is, the transmission/non-transmission of the block are controlled on the basis of the absolute value of a frame difference between the preceding frame and the present frame.

The comparing circuit 6 detects a frame difference between the values of the pixels of the present frame and the preceding frame. The frame difference is converted into the absolute value by an absolute value forming circuit 10, an output signal of which is supplied to a summing circuit 11. The absolute value of the frame differences with respect to every two pixels are summed by the summing circuit 11 for one block. An output of the summing circuit 11 is supplied to a comparing circuit 12.

A threshold value M regarding the motion is supplied to the comparing circuit 12 from a buffering circuit 19, which will be explained below. When the summed value is equal to or smaller than the threshold value M, an output of the comparing circuit 12 is set to "0". In the other cases, the output of the comparing circuit 12 is set to "1". In other words, when the summed value is equal to or less than the threshold value M, the frame dropping process in which the block is not terminated is executed. Data corresponding to the motion between the blocks can be derived by other methods.

The output of the comparing circuit 12 to control the transmission/non-transmission of the block is also supplied to a detecting circuit 20 to detect a transmission ratio w for one frame period. Since the adaptive frame dropping is executed in the frames F2, F4, ... after every two frames, the transmission ratio w relative to the original data changes in each following frame. Since the total number of blocks in one frame is known, the ratio of the number of blocks which are transmitted to the total number is detected as the transmission ratio w. An output signal of the detecting circuit 20 is supplied to the buffering circuit 19. The output signal of the detecting circuit 20 is also necessary to discriminate the block which has been frame-dropped on the reception side, and is supplied as a frame dropping flag to a frame segmentation circuit 22 and is transmitted together with encoding data, which will be explained below.

An encoder of the ADRC is connected to the frame dropping circuit 5. The buffering circuit 19 is provided in conjunction with the encoder.

An output signal of the frame dropping circuit 5 is supplied to a detecting circuit 13 and a delay circuit 14. The detecting circuit 13 detects the dynamic range DR and the minimum value MIN of the block. The delay circuit 14 delays data by a time to detect the minimum value MIN and the dynamic range DR. A subtracting circuit 15 subtracts the minimum value MIN from the video data from the delay circuit 14, so that the video data from which the minimum value has been eliminated is derived from the subtracting circuit 15.

The output data of the subtracting circuit 15 and the dynamic range DR are supplied to a quantizing circuit 18 through delay circuits 16 and 17, respectively. A code signal DT of an n-bit length (n = 0, 1, 2, 3, or 4 bits) smaller than the original bit length (8 bits) is obtained from the quantizing circuit 18. The quantizing circuit 18 executes a quantization adapted to the dynamic range DR. That is, the video data from which the minimum value has been eliminated are divided by a quantization step Δ which is obtained by dividing the dynamic range DR into 2ⁿ equal steps. An integral value which is obtained by omitting a fraction of the quotient is used as a code signal DT. The quantizing circuit 18 can be constructed by a dividing circuit or a ROM.

A bit length n which is assigned to the code signal DT is determined in a manner such that a generation data amount per predetermined period, for instance, every two frames does not exceed a target value L (bits). For such buffering, the buffering circuit 19 to which the dynamic range DR is supplied is provided. A plurality of, for example, 32 sets (T1, T2, T3, T4, M) of threshold values are prepared for the buffering circuit 19 as will be explained below. The sets of the threshold values are distinguished by parameter codes Pi (i = 1, 2, 3, ..., 32). The generation data amount is set so as monotonously to decrease as the number i of the parameter code Pi increases. However, the picture quality of the reconstructed image deteriorates with decrease in generation data amount.

The threshold values T1 to T4 in the level direction from the buffering circuit 19 and the dynamic range DR which has been transmitted through the delay circuit 17 are supplied to a bit length deciding circuit 21. The delay circuits 16 and 17 are provided to delay the data by a time which is required to decide the threshold values by the buffering circuit 19. The dynamic range DR and the threshold values T1 to T4 (T1 < T2 < T3 < T4) are supplied to a bit length deciding circuit 21. The bit length n to be assigned is determined on the basis of the relations of the magnitudes between the dynamic range DR and the threshold values T1 to T4.

The encoded outputs DR, MIN and DT of the ADRC encoder, the flag indicative of the transmission/non-transmission of the block, and the parameter codes Pi are supplied to the frame segmentation circuit 22. The transmission data is taken out to an output terminal 23. The frame segmentation circuit 22 forms the transmission data in which a sync signal has been added to the above encoded outputs. The frame segmentation circuit 22 also executes an encoding of an error correction code.

Although not shown, on the reproducing side, there are provided a frame desegmentation circuit, a decoder of the ADRC, a circuit to interpolate the frame dropped block by the preceding block, a circuit to interpolate the non-transmission pixels, a block desegmentation circuit, and the like. The ADRC decoder decodes the bit length n by the threshold values T1 to T4 which are designated by the parameter codes Pi and the dynamic range DR, and reconstructs the level by using the quantization step Δ according to the bit length n and the dynamic range DR and the value of the code signal DT. Further, the minimum value MIN is added to the reconstructed level.

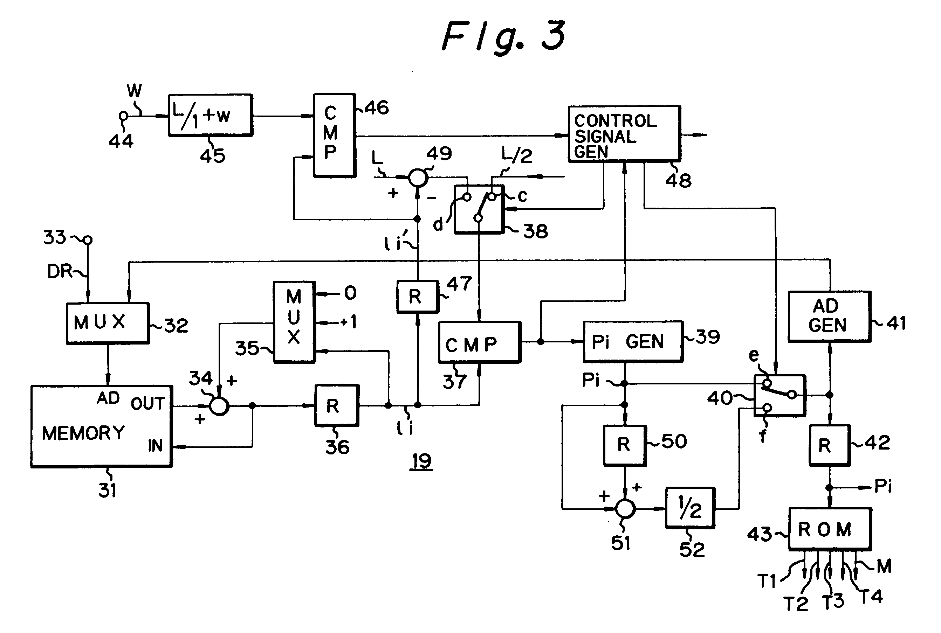

Figure 3 shows an example of the buffering circuit 19. A memory (RAM) forms a frequency distribution table and an accumulative frequency distribution table. An address is supplied to the memory 31 through a multiplexer 32. The dynamic range DR is supplied as one input of the muliplexer 32 from an input terminal 33 and an address from an address generating circuit 41 is supplied as another input. An output signal of an adding circuit 34 is supplied to the memory 31. Output data of the memory 31 and an output of a multiplexer 35 are added by the adding circuit 34.

An output of the adding circuit 34 is supplied to a register 36. An output of the register 36 is supplied to the multiplexer 35 and a comparing circuit 37. In addition to the output of the register 36, 0 and +1 are supplied to the multiplexer 35. When an arithmetic operation of a generation data amount has been performed, a data amount li for one frame period which is generated by the ADRC encoding is obtained in an output of the register 36.

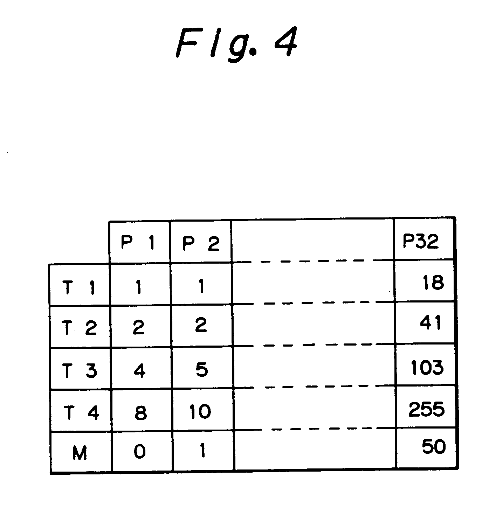

The comparing circuit 37 compares the generation data amount li and a target value from a switching circuit 38. An output signal of the comparing circuit 37 is supplied to a parameter code generating circuit 39 and a control signal generating circuit 48. The parameter codes Pi from the parameter code generating circuit 39 are supplied through a switching circuit 40 to the address generating circuit 41 and a register 42. The parameter codes Pi taken into the register 42 are supplied to the frame segmentation circuit 22 as mentioned above and are also supplied to a ROM 43. A table of threshold values shown in Figure 4 has been stored in the ROM 43. The ROM 43 generates sets (T1i, T2i, T3i, T4i, Mi) of the threshold values in correspondence to the parameter codes Pi which have been input as addresses. The threshold value table is constructed so as to more severely limit the generation data amount as the number of the parameter code Pi increases. That is, the values of the threshold values T1 to T4 in the level direction and the frame dropping threshold value M monotonously increase. As mentioned above, the threshold values in the level direction are supplied to the bit length deciding circuit 21 and the threshold value M regarding the motion is supplied to the comparing circuit 12.

The transmission ratio w which has been detected by the detecting circuit 20 is supplied to an arithmetic operating circuit 45. Assuming that a target value for the generation data amount for a two-frame period of time of F1 and F2 or the like is set to L, the arithmetic operating circuit 45 executes an arithmetic operation of L/(1 + w). The result of the arithmetic operation is supplied to a comparing circuit 46. An output of the arithmetic operating circuit 45 is used as a target value about the present frame when the mean value of the numbers of the sets of the threshold values for the preceding two-frame period is applied to the present frame.

A generation data amount 1' transmitted through a register 47 is supplied to the comparing circuit 46. A comparison output of the comparing circuit 46 is supplied to the control signal generating circuit 48. The generation data amount 1' is derived with respect to the present frame when the mean value of the numbers of the sets of the threshold values for the preceding two-frame period is applied to the present frame. The generation data amount 1' is also supplied to a subtracting circuit 49. The subtracting circuit 49 subtracts 1' from a target value L for the 2-frame period. (L - 1') from the subtracting circuit 49 is supplied to an input terminal d of the switching circuit 38. A target value of L/2 is supplied to the other input terminal c of the switching circuit 38.

The output signal of the comparing circuit 46 is supplied to the control signal generating circuit 48.

The control circuit 48 generates control signals to clear the registers 36, 42 and 47, and a register 50, a signal to control the fetching of the data into the register 42, and switching signals to respectively control the switching circuits 38 and 40. The switching circuit 38 supplies the target value of L/2 to the comparing circuit 37 through the input terminal c in the initial status and upon scene change. In other cases, the switching circuit 38 supplies an output signal of the subtracting circuit 49 to the comparing circuit 37 as a target value.

The parameter codes Pi from the parameter code generating circuit 39 are supplied to an input terminal e of the switching circuit 40, the register 50, and an adding circuit 51. An output of the register 50 is supplied to the adding circuit 51. An output of the adding circuit 51 is supplied to a 1/2 multiplying circuit 52. The number of the mean value of the numbers Ni and Ni + 1 of the threshold values of two sequential frames is generated from the multiplying circuit 52. The mean value is supplied to an input terminal f of the switching circuit 40. The switching circuit 40 is controlled by the switching signal from the control signal generating circuit 48. When the terminal e of the switching circuit 40 is selected, the parameter codes Pi from the parameter code generating circuit 39 are supplied to the address generating circuit 41. On the other hand, when the input terminal f is selected, the parameter codes Pi indicative of the averaged threshold value number are supplied to the address generating circuit 41.

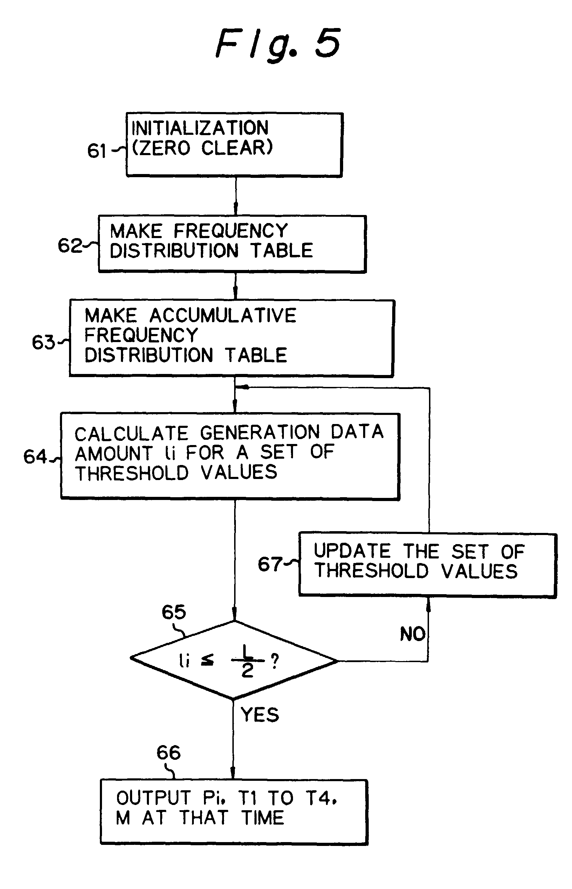

In the initial state or just after a scene change has occurred, buffering to control the amount of data generated for one frame period to L/2 or less is executed. That is, in the above case, as shown in Figure 3, the switching circuit 38 selects the input terminal d and the switching circuit 40 selects the input terminal 3. The operation of the buffering circuit 19 in this state will now be described with reference to a flowchart of Figure 5.

In the first step 61, the memory 31 and the registers 36, 42, 47, and 50 are cleared to zero. To clear the memory 31 to zero, the multiplexer 32 selects the address generated from the address generating circuit 41 and the output of the adding circuit 34 is always set to zero. The address changes to (0, 1, 2, ..., 255) and the zero data is written into all of the addresses in the memory 31.

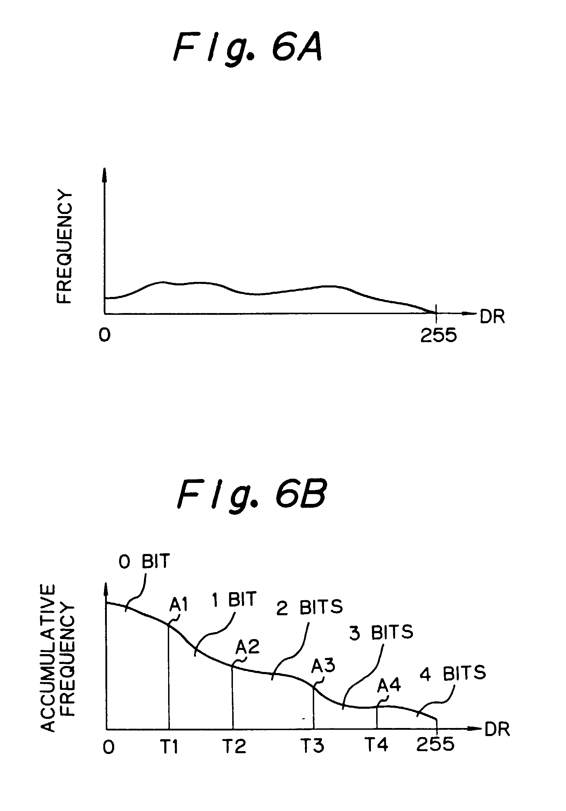

In the next step 62, a frequency distribution table of the dynamic range DR of a certain frame as a unit period of time when the buffering is executed is formed in the memory 31. The multiplexer 32 selects the dynamic range DR from the terminal 33. The multiplexer 35 selects +1. Therefore, at the end of one frame period, the generation frequency of each DR is stored into each address in the memory 31 corresponding to the dynamic range DR. In the frequency distribution table in the memory 31, an axis of abscissa indicates the DR and an axis of ordinate represents the frequency as shown in Figure 6A.

The frequency distribution table is converted into the accumulative frequency distribution table (step 63). When the accumulative frequency distribution table is formed, the multiplexer 32 selects the address from the address generating circuit 41 and the multiplexer 35 selects the output of the register 36. The address is sequentially decreased from 255 to 0. The read-out output of the memory 31 is supplied to the adding circuit 34 and is added to the content in the register 36 by the adding circuit 34. The output of the adding circuit 34 is written into the same address as the read address of the memory 31. The content in the register 36 is updated to the output of the adding circuit 34. In the initial status in which the address in the memory 31 is set to 255, the register 36 has been cleared to zero. When the frequencies have been accumulated with respect to all of the addresses in the memory 31, an accumulative frequency distribution table shown in Figure 6B is formed in the memory 31.

A generation data amount li when the sets (T1i, T2i, T3i, T4i) of the threshold values in the level direction have been applied to the accumulative frequency distribution table is calculated (step 64). When the generation data amount li is calculated, the multiplexer 32 selects the output of the address generating circuit 41 and the multiplexer 35 selects the output of the register 36. The parameter code generating circuit 39 generates a parameter code which sequentially changes from P1 to P32. The parameter codes Pi are supplied to the address generating circuit 41 through the switching circuit 40 and the addresses corresponding to the threshold values of (T1i, T2i, T3i, T4i) are sequentially generated.

Values A1, A2, A3 and A4 which have been read out of the addresses corresponding to the threshold values are accumulated by the adding circuit 34 and the register 36. The accumulative value (A1 + A2 + A3 + A4) corresponds to the generation data amount li when the sets of the threshold values designated by the parameter codes pi have been applied. That is, in the accumulative frequency distribution table shown in Figure 6B, a value in which the number (16) of pixels in the block has been multiplied to the total value (A1 + A2 + A3 + A4) of the values A1, A2, A3, and A4 which had been read out of the addresses respectively corresponding to the threshold values T1, T2, T3, and T4 is equal to the generation data amount (bit length). Since the number of pixels is omitted in the buffering circuit 19 shown in Figure 3.

The generation data amount li is compared with the target value L/2 (step 65). The output of the comparing circuit 37 which is generated when (Ai ≤ L/2) is satisfied is supplied to the parameter code generating circuit 39. The increment of the parameter code Pi is stopped. The parameter code Pi from the register 42 and the set of the threshold values generated from the ROM 43 are generated (step 66).

If (li ≤ L/2) is not satisfied in discriminating step 65 in the comparing circuit 37, the parameter codes Pi are changed to the next parameter codes Pi + 1 and the address corresponding to Pi + 1 is generated from the address generating circuit 41. In a manner similar to the above, a generation data amount li + 1 is calculated and compared with the target value L/2 by the comparing circuit 37. The above operations are repeated until (li ≤ L/2) is satisfied.

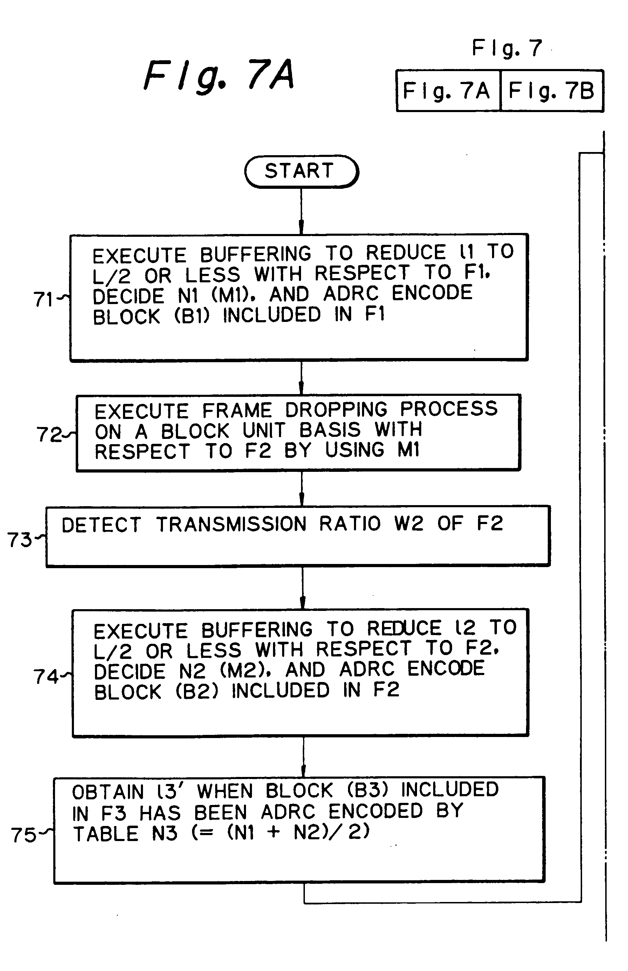

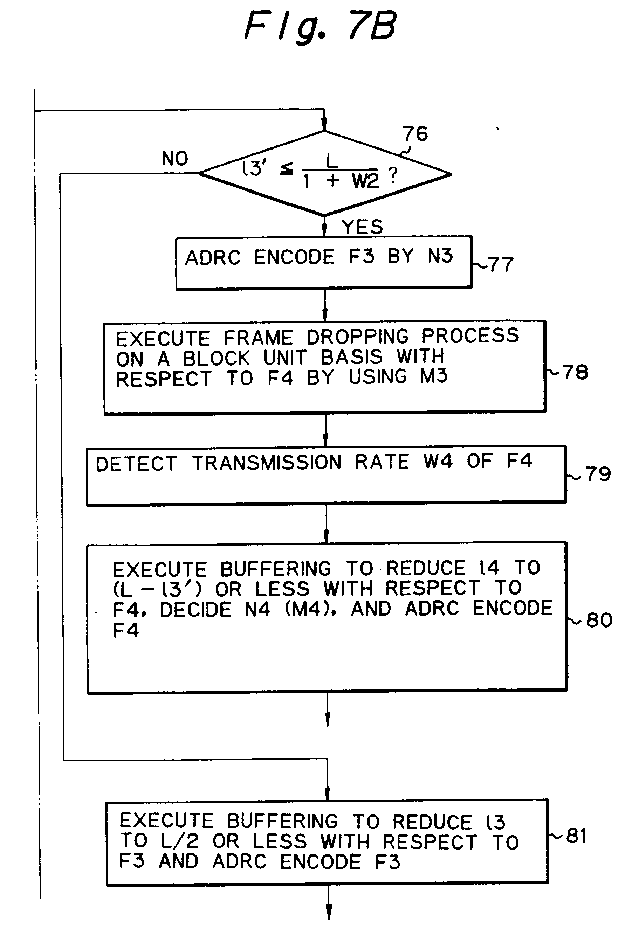

The operation of the embodiment will be described with reference to Figure 7. In the initial state in which the image data of the first frame F1 shown in Figure 2 is input, the buffering to reduce the amount li of data which is generated for the frame F1 by the above operation to L/2 or less is executed. The encoding of the two-dimensional ADRC is executed by the threshold values T1 to T4 in the level direction at that time (step 71). N1 denotes the number of the threshold value used in the frame F1, that is, the number which coincides with the parameter code Pi of the threshold value used.

In the next frame F2, the frame dropping process is executed on a block unit basis by the threshold value M regarding the motion of N1 (step 72). The transmission ratio w of the frame F2 after completion of the frame dropping process is detected by the detecting circuit 20 (step 73). The data of the frame F2 after completion of the frame dropping process is ADRC encoded (step 74). The threshold value at that time is set so as to reduce the generation data amount 12 to L/2 or less in a manner similar to the frame F1.

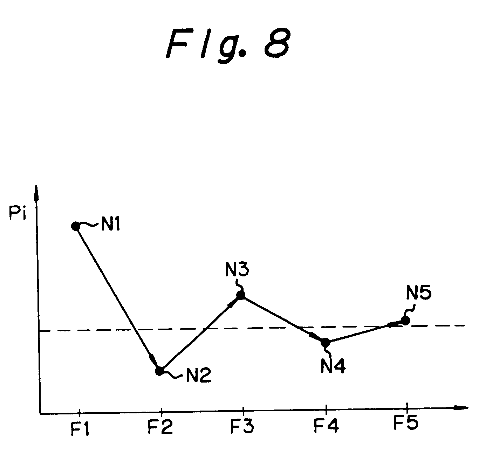

With respect to the frames F1 and F2, the target value L for the 2-frame period is set to the half value, thereby setting the target value L/2 for the one frame period. For the frame F2, however, an amount of data to be transmitted is reduced by sub-sampling. Thus, as shown in Figure 8, the number N1 of the threshold value about the frame F1 is large and the number N2 of the threshold value regarding the frame F2 is fairly small.

After an accumulative frequency distribution table was formed with regard to the next frame F3, a generation data amount 13' when the encoding has been executed by the mean value N3 of the numbers N1 and N2 of the threshold values of the two preceding frames F1 and F2 is obtained (step 75). The generation data amount 13' is supplied to the comparing circuit 46 through the register 47. The comparing circuit 46 executes a comparing operation of (13' ≤ L/(1 + w2)) (step 76).

When the above relation is satisfied, the data of the frame F3 is encoded by the threshold value of the number N3 (step 77). On the contrary, when the above relation is not satisfied, it is determined that a scene change occurs. The buffering so as to reduce the generation data amount 13 regarding the frame F3 into L/2 or less is performed and the data of the frame F3 is encoded by the threshold value determined by the buffering (step 81). The above process is similar to those in the initial status in step 71. The operations similar to those in step 71 and the subsequent steps are repeated hereinbelow.

When the relation in step 76 is satisfied, the frame dropping process regarding the frame F4 is executed by the threshold value M3 included in the number N3 of the threshold value (step 78). A ratio w4 of the transmission data of the frame F4 after the frame dropping is detected (step 79).

In the buffering about the frame F4, (L - 13') formed by the subtracting circuit 49, is used as a target value. That is, in the preceding frame F3, since the data of 13' has been generated for the target value L for the 2-frame period, the generation data amount of the frame F4 is suppressed to a value which is equal to or less than the remaining data amount of (L - 13'). The data of the frame F4 is encoded by the number N4 of the threshold value determined by the buffering (step 80). The next process of step 80 is similar to that in step 75 and processes similar to those mentioned above are repeated.

In the embodiment in which the above operations are executed, when a scene change does not occur, as shown in Figure 8, the number of the threshold value can be converged to a mean value shown by a broken line for the frame F3 and subsequent frames.

In the above description, the dynamic range DR and the minimum value MIN are transmitted in order to transmit the dynamic range information. However, the maximum value MAX or the quantization step width can be also transmitted as an additional code in place of the dynamic range DR.

On the other hand, in the above embodiment, the encoding process has been applied to the pixel data themselves of the block after each 2-frame period. However, the encoding can be also performed to a difference (residual) between each pixel data of the preceding frame and each pixel data of the post frame. That is, in such a case, the data corresponding to the pixels in each block of the post frame has differential value.

The invention, further, can use a block encoding of a discrete cosine transform (DCT) or the like, instead of ADRC. In the case of DCT, encoding using the above differential value in place of the pixel data is effective.

Since the compression encoding of the ADRC or the like is executed for a two-dimensional block, the necessary memory capacity can be reduced as compared with a three-dimensional block. On the other hand, since there is used a hybrid construction of the frame dropping on a block unit basis and the compression encoding, the compression ratio can be raised.

## Claims

1. A coding apparatus for a digital image signal, the apparatus comprising:
a block segmentor (2) for converting an input digital image signal into a first output signal having a two-dimensional block structure;
a circuit (5) for receiving and processing a second output signal, such that between a first and a second block which are located at spatially the same position and respectively belong to a pair of sequential frames of said second output signal, said first and second blocks are transmitted or not transmitted in dependence upon a control signal;
a control circuit (6 to 12) for generating said control signal; and
an encoder (18) to which pixel data of said first block and pixel data of said second block that are to be transmitted are supplied, said encoder (18) compression encoding said pixel data on a block unit basis;
said apparatus being characterised in that:
said control signal is dependent upon an absolute value of a difference between values of pixel data at the same position between said first and second blocks;
said control signal controls said circuit (5) to always transmit said first block and to either transmit or not transmit said second block; and
in that there is provided:
a sub-sampling circuit (3) for receiving and sub-sampling said first output signal to generate said second output signal, wherein sequential frames of said first output signal are grouped in pairs and said sub-sampling circuit (3) has a sub-sampling phase that is inverted every sequential pair of frames.

2. A coding apparatus according to Claim 1, further comprising a buffering circuit (19) which controls said compression encoding, said encoding being accomplished in a two-step process such that a data amount for a two-frame period is equal to or less than a target value "L", said two-step process comprising:
(a) processing a preceding pair of frames with reference to a predetermined threshold level to generate a mean threshold for said preceding frames and applying said mean threshold to said first frame of said two frame period to generate an amount of data "1"' for said first frame; and
(b) buffering said second frame of said two frame period to limit an amount of data generated for said second frame to a value equal to or less than "(L-1')".

3. A coding apparatus according to Claim 2 wherein the buffering circuit (19) initially limits the generation data amount for one frame period to a value equal to or less than "L/2".

4. A coding apparatus according to Claim 2 or Claim 3 wherein said buffering circuit (19) includes a scene change detector (37), a scene change being detected if a generation data amount for said first frame exceeds a value dependent upon the target value for that first frame and a transmission ratio of a preceding frame.

5. A coding apparatus according to Claim 4 wherein the buffering circuit (19) limits the generation data amount for one frame period to a value equal to or less than "L/2" when a scene change is detected.

6. A coding apparatus according to Claim 2 wherein said buffering circuit (19) controls the amount of data generated with first and second threshold values, said threshold values being provided in a threshold value table (43), said first threshold values being defined in a level direction and said second threshold values being provided for controlling the transmission/non-transmission of the second block.

7. A coding apparatus according to any one of the preceding claims wherein difference data is generated for each pixel of said first and second blocks, said difference data being equal to the difference between respective pixels of said first and second blocks, said difference data subsequently being used as pixel data for said second block.

8. A coding apparatus according to any one of the preceding claims wherein said encoder (18) executes a quantization with a bit length shorter than an original bit length so as to be adaptive to a dynamic range equal to a difference between maximum and minimum values of each of said blocks.

9. A method of encoding a digital signal, the method comprising:
(a) converting an input digital signal into a first output signal having a two-dimensional block structure;
(b) grouping sequential frames of said first output signal together in pairs;
(c) sub-sampling said first output signal with a sub-sampling phase that is inverted every sequential pair of frames to produce a second output signal;
(d) generating a control signal that is dependent upon an absolute value of a difference between values of pixel data at the same position between first and second blocks of a pair of sequential frames of said second output signal;
(e) processing said second output signal in a circuit (5), such that said first and second blocks are transmitted or not transmitted in dependence upon said control signal, said control signal instructing said circuit (5) to always transmit said first block and selectively transmit or not transmit said second block; and
(f) compression encoding pixel data of said first block and pixel data of said second block that are to be transmitted on a block unit basis.

## Patentansprüche

1. Codiergerät für ein digitales Bildsignal, wobei das Gerät umfaßt:
einen Blocksegmentierer (2) zum Umsetzen eines digitalen Eingangsbildsignals in ein erstes Ausgangssignal, welches einen zweidimensionalen Blockaufbau hat;
eine Schaltung (5) zum Empfang und Verarbeiten eines zweiten Ausgangssignals, so daß zwischen einem ersten und einem zweiten Block, die räumlich in der gleichen Position angeordnet sind und jeweils zu einem Paar von aufeinanderfolgenden Vollbildern des zweiten Ausgangssignals gehören, der erste und zweite Block in Abhängigkeit von einem Steuersignal übertragen oder nicht übertragen wird;
eine Steuerschaltung (6 bis 12) zum Erzeugen des Steuersignals; und
einen Codierer (18), zu welchem Pixeldaten des ersten Blocks und Pixeldaten des zweiten Blocks, die zu übertragen sind, geliefert werden, wobei der Codierer (18) die Pixeldaten auf der Basis einer Blockeinheit kompressions-codiert;
wobei das Gerät **dadurch gekennzeichnet ist, daß**
das Steuersignal abhängig ist von einem Absolutwert einer Differenz zwischen Werten von Pixeldaten in der gleichen Position zwischen dem ersten und dem zweiten Block;
das Steuersignal die Schaltung (5) steuert, um den ersten Block immer zu übertragen und um den zweiten Block entweder zu übertragen oder nicht zu übertragen; und
daß vorgesehen ist
eine Sub-Abtastschaltung (3), um das erste Ausgangssignal zu empfangen und sub-abzutasten, um das zweite Ausgangssignal zu erzeugen, wobei aufeinanderfolgende Vollbilder des ersten Ausgangssignals in Paare gruppiert sind und die Sub-Abtastschaltung (3) eine Sub-Abtastphase hat, die bei jedem folgenden Vollbildpaar invertiert ist.

2. Codiergerät nach Anspruch 1, welches außerdem eine Pufferschaltung (19) besitzt, welche die Kompressionscodierung steuert, wobei die Codierung in einem Zweischrittverfahren so erzielt wird, daß eine Datenmenge für eine Zwei-Vollbildperiode gleich oder geringer als ein Zielwert "L" ist, wobei das Zweischrittverfahren umfaßt:
(a) Verarbeiten eines vorhergehenden Paars von Vollbildern in bezug auf einen vorgegebenen Schwellenwertpegel, um einen mittleren Schwellenwert für die vorhergehenden Vollbilder zu erzeugen, und Anwenden des mittleren Schwellenwerts auf das erste Vollbild der Zwei-Vollbildperiode, um eine Datenmenge "1'" für das erste Vollbild zu erzeugen; und
(b) Puffern des zweiten Vollbildes der Zwei-Vollbildperiode, um eine Datenmenge, die für das zweite Vollbild erzeugt wurde, auf einen Wert zu begrenzen, der gleich oder kleiner ist als "(L-1')".

3. Codiergerät nach Anspruch 2, wobei die Pufferschaltung (19) zuerst die Erzeugung einer Datenmenge für eine Vollbildperiode auf einen Wert begrenzt, der gleich oder kleiner ist als "L/2".

4. Codiergerät nach Anspruch 2 oder 3, wobei die Pufferschaltung (19) einen Szenenänderungsdetektor (37) umfaßt, wobei eine Szenenänderung ermittelt wird, wenn eine Erzeugung einer Datenmenge für das erste Vollbild einen Wert in Abhängigkeit vom Zielwert für das erste Vollbild und eine Übertragungsrate eines vorhergehenden Vollbilds übersteigt.

5. Codiergerät nach Anspruch 4, wobei die Pufferschaltung (19) die Erzeugung einer Datenmenge für die eine Vollbildperiode auf einen Wert beschränkt, der gleich oder kleiner ist als "L/2", wenn eine Szenenänderung ermittelt wird.

6. Codiergerät nach Anspruch 2, wobei die Pufferschaltung (19) die Menge der erzeugten Daten mit dem ersten und zweiten Schwellenwert steuert, wobei die Schwellenwerte in einer Schwellenwerttabelle (43) bereitgestellt sind, wobei die ersten Schwellenwerte in einer Pegelrichtung bestimmt sind und die zweiten Schwellenwerte vorgesehen sind, um die Übertragung/Nichtübertragung des zweiten Blocks zu steuern.

7. Codiergerät nach einem der vorhergehenden Ansprüche, wobei Differenzdaten für jedes Pixel des ersten und zweiten Blocks erzeugt werden, wobei die Differenzdaten gleich der Differenz zwischen entsprechenden Pixeln des ersten und zweiten Blocks sind, wobei die Differenzdaten nachfolgend als Pixeldaten für den zweiten Block verwendet werden.

8. Codiergerät nach einem der vorhergehenden Ansprüche, wobei der Codierer (18) eine Quantisierung mit einer Bitlänge ausführt, die kürzer ist als eine ursprüngliche Bitlänge, um so adaptiv zu einem dynamischen Bereich gleich einer Differenz zwischen den Maximal- und Minimalwerten eines jeden der Blöcke zu sein.

9. Verfahren zur Codierung eines Digitalsignals, wobei das Verfahren umfaßt:
(a) Umsetzen eines Eingangsdigitalsignals in ein erstes Ausgangssignal, welches eine zweidimensionale Blockstruktur hat;
(b) Zusammengruppieren von aufeinanderfolgenden Vollbildern des ersten Ausgangssignals zu Paaren;
(c) Sub-Abtasten des ersten Ausgangssignals mit einer Sub-Abtastphase, die bei jedem folgenden Vollbildpaar invertiert wird, um ein zweites Ausgangssignal zu erzeugen;
(d) Erzeugen eines Steuersignals, welches abhängig vom Absolutwert einer Differenz zwischen Werten von Pixeldaten in der gleichen Position zwischen den ersten und zweiten Blöcken eines Paars von aufeinanderfolgenden Vollbildern des zweiten Ausgangssignals ist;
(e) Verarbeiten des zweiten Ausgangssignals in einer Schaltung (5), so daß der erste und zweite Block in Abhängigkeit vom Steuersignal übertragen oder nicht übertragen wird, wobei das Steuersignal die Schaltung (5) anweist, um den ersten Block immer zu übertragen und den zweiten Block wahlweise zu übertragen oder nicht zu übertragen; und
(f) Kompressions-Codieren von Pixeldaten des ersten Blocks und von Pixeldaten des zweiten Blocks, die auf der Basis einer Blockeinheit zu übertragen sind.

## Revendications

1. Dispositif de codage pour un signal d'image numérique, le dispositif comprenant :
un dispositif de segmentation de bloc (2) pour convertir un signal d'image numérique d'entrée en un premier signal de sortie ayant une structure de bloc bidimensionnelle ;
un circuit (5) pour recevoir et traiter un second signal de sortie, de sorte qu'entre un premier et un second blocs qui sont situés, de manière spatiale, à la même position et qui appartiennent, respectivement, à deux trames séquentielles dudit second signal de sortie, lesdits premier et second blocs soient transmis ou non transmis en fonction d'un signal de contrôle ;
un circuit de contrôle (6 à 12) pour générer ledit signal de contrôle ; et
un codeur (18) auquel les données de pixel dudit premier bloc et les données de pixel dudit second bloc qui sont à transmettre sont fournies, ledit codeur (18) codant par compression lesdites données de pixel sur une base d'unité de bloc ;
ledit dispositif étant caractérisé en ce que :
ledit signal de contrôle est dépendant d'une valeur absolue d'une différence entre des valeurs de données de pixel à la même position entre lesdits premier et second blocs ;
ledit signal de contrôle contrôle ledit circuit (5) pour toujours transmettre ledit premier bloc et pour soit transmettre, soit ne pas transmettre ledit second bloc ; et
en ce qu'il est prévu :
un circuit de sous-échantillonnage (3) pour recevoir et sous-échantillonner ledit premier signal de sortie pour générer ledit second signal de sortie, dans lequel les trames séquentielles dudit premier signal de sortie sont groupées par paires et dans lequel ledit circuit de sous-échantillonnage (3) a une phase de sous-échantillonnage qui est inversée à chaque paire séquentielle de trames.

2. Dispositif de codage selon la revendication 1 comprenant, de plus, un circuit de mémorisation tampon (19) qui contrôle ledit codage par compression, ledit codage étant accompli dans un traitement à deux étapes, de sorte qu'une quantité de données pendant une période de deux trames est égale ou inférieure à une valeur cible "L", ledit traitement à deux étapes comprenant :
(a) le traitement de deux trames précédentes avec référence à un niveau de seuil prédéterminé pour générer un seuil moyen pour lesdites trames précédentes et l'application dudit seuil moyen à ladite première trame de ladite période de deux trames pour générer une quantité de données "l'" pour ladite première trame ; et
(b) la mémorisation tampon de ladite seconde trame de ladite période de deux trames pour limiter une quantité de données générées pour ladite seconde trame à une valeur égale ou inférieure à "(L-l')".

3. Dispositif de codage selon la revendication 2, dans lequel le circuit de mémorisation tampon (19) limite initialement la quantité de données de génération pendant une première période de trame à une valeur égale ou inférieure à "L/2".

4. Dispositif de codage selon la revendication 2 ou la revendication 3, dans lequel ledit circuit de mémorisation tampon (19) comprend un détecteur de changement de scène (37), un changement de scène étant détecté si une quantité de données de génération pour ladite première trame dépasse une valeur dépendant de la valeur cible pour cette première trame et un rapport de transmission d'une trame précédente.

5. Dispositif de codage selon la revendication 4, dans lequel le circuit de mémorisation tampon (19) limite la quantité de données de génération pendant une période de trame à une valeur égale ou inférieure à "L/2" lorsqu'un changement de scène est détecté.

6. Dispositif de codage selon la revendication 2, dans lequel ledit circuit de mémorisation tampon (19) contrôle la quantité de données générées avec les première et seconde valeurs de seuil, lesdites valeurs de seuil étant fournies dans une table de valeurs de seuil (43), lesdites premières valeurs de seuil étant définies dans une direction de niveau et lesdites secondes valeurs de seuil étant fournies pour contrôler la transmission/non-transmission du second bloc.

7. Dispositif de codage selon l'une quelconque des revendications précédentes, dans lequel des données de différence sont générées pour chaque pixel desdits premier et second blocs, lesdites données de différence étant égales à la différence entre les pixels respectifs desdits premier et second blocs, lesdites données de différence étant utilisées par la suite comme des données de pixel pour ledit second bloc.

8. Dispositif de codage selon l'une quelconque des revendications précédentes, dans lequel ledit codeur (18) exécute une quantification avec une longueur de bits plus courte qu'une longueur de bits d'origine afin d'être adaptable à une plage dynamique égale à une différence entre les valeurs maximale et minimale de chacun desdits blocs.

9. Procédé de codage d'un signal numérique, le procédé comprenant :
(a) la conversion d'un signal numérique d'entrée en un premier signal de sortie ayant une structure de bloc bidimensionnelle ;
(b) le groupement des trames séquentielles dudit premier signal de sortie les unes avec les autres par paires ;
(c) le sous-échantillonnage dudit premier signal de sortie avec une phase de sous-échantillonnage qui est inversée à chaque paire séquentielle de trames pour produire un second signal de sortie ;
(d) la génération d'un signal de contrôle qui est dépendant d'une valeur absolue d'une différence entre des valeurs de données de pixel à la même position entre les premier et second blocs de deux trames séquentielles dudit second signal de sortie ;
(e) le traitement dudit second signal de sortie dans un circuit (5), de sorte que lesdits premier et second blocs soient transmis ou non transmis en fonction dudit signal de contrôle, ledit signal de contrôle donnant l'ordre audit circuit (5) de toujours transmettre ledit premier bloc et de transmettre ou de ne pas transmettre, de manière sélective, ledit second bloc ; et
(f) le codage par compression des données de pixel dudit premier bloc et des données de pixel dudit second bloc qui sont à transmettre sur une base d'unité de bloc.
